# EUROPEAN PATENT SPECIFICATION

(11) **EP 3 505 467 B1**
(45) Date of publication and mention of the grant of the patent: **26.08.2020**
(21) Application number: 18193382.1
(22) Date of filing: 10.09.2018
(51) Int. Cl.: B65G 47/14, B65G 47/256, B65G 47/52

(54) **RING MATERIAL SUPPLY SYSTEM**
RINGMATERIALZUFUHRSYSTEM
SYSTÈME D'ALIMENTATION EN MATÉRIAU D'ANNEAU

(30) Priority: 26.12.2017 TW 106145697
(43) Date of publication of application: 03.07.2019
(73) Proprietor: Yoli New Technology Co., Ltd., Kaohsiung City (TW)
(72) Inventor: SU, Fei-Long, Kaohsiung City (TW)
(74) Representative: Viering, Jentschura & Partner mbB Patent- und Rechtsanwälte

(56) References cited:
- JP-A- 2001 158 524
- JP-A- 2005 289 545
- KR-U- 20140 001 058
- US-A- 3 357 536
- US-A- 4 878 575

## Description

### BACKGROUND OF THE INVENTION

### 1. Field of the Invention:

The present invention relates to a ring material supply system.

### 2. Description of the Related Art:

Taiwan patent M521063 discloses a material arrangement and supply device having an electrostatic assistance function, which comprises a base, a cover plate, and an electrostatic attraction device. The cover plate is connected with the base and provided with a plurality of module guide strips. When the cover plate is at a covering status, the electrostatic attraction device helps to regularly arrange the target components that are to be tested, such that each of the target components is loaded onto the test rotary table one-by-one by the module guide strips, thus resolving the issue of the target components irregularly arranged on the test rotary table.

However, when the target components are ring materials, the device aforementioned may not supply the ring materials onto the test rotary table one-by-one. One of the common issues is that two ring materials overlap during the arrangement process. In a worst case scenario, the components may be stuck together, thus affecting the arrangement efficiency. Also, when the ring materials are arranged by the guide strip, the frictional force among the ring materials causes the ring materials to rotate, thus further affecting the arrangement performance.

The document JP2005289545A discloses a supply system according to the preamble of claim 1.

### SUMMARY OF THE INVENTION

For improving the issues above, a ring material supply system is disclosed. By use of a height difference of the dispenser rotary table, the upper ring of overlapping ring materials is blew back to the dispenser to be re-arranged, such that the ring materials are orderly and regularly supplied, preventing the problems of tangling or overlapping from happening.

To achieve the aforementioned objectives, a ring material supply system according to the present invention comprises:
a base;
a dispenser rotary table rotatably disposed on the base for holding a plurality of ring materials, the dispenser rotary table having an inner circle area and an outer circle area disposed on an outer side of the inner circle area, a horizontal height of the inner circle area being higher than a horizontal height of the outer circle area, a height difference between the horizontal height of the inner circle area and the horizontal height of the outer circle area being equal to a thickness of a ring, the dispenser rotary table further comprising an export portion;
a de-overlap blower set disposed at a periphery of the dispenser rotary table, the de-overlap blower set blowing an upper ring of two overlapping ring materials to the inner circle area;
a material guiding rotary disc set disposed at the periphery of the dispenser rotary table for guide the ring materials; and
a dispenser blower set disposed on the base for dispensing the ring materials.

With a height difference between the inner circle area and the outer circle area of the dispenser rotary table, when the ring materials are overlapped, the de-overlap blower set blow the upper ring back to the inner circle area, while the lower ring is prevented from being blown. Also, with the dispenser continuously rotating and supplying, the ring materials are prevented from overlapping each other.

Further, the material guiding rotary disc set smoothly guides progressing route of the ring materials. With the continuous rotation of the guiding rotary discs, the arrangement of ring materials is facilitated, so as to prevent the ring materials from respective rotation due to the friction force, and also prevent the arrangement from being hindered.

### BRIEF DESCRIPTION OF THE DRAWINGS

**Fig. 1** is a top view of the ring material supply system in accordance with an embodiment of the present invention disposed at a component examination machine.
**Fig. 2** is a top view of the ring material supply system in accordance with an embodiment of the present invention.
**Fig. 3** is a partially enlarged schematic view of the present invention, illustrating the first guiding rotary disc guiding the route of the ring materials.
**Fig. 4** is another partially enlarged schematic view of the present invention, illustrating the first de-overlap blower de-overlapping the overlapped ring materials.
**Fig. 5** is another partially enlarged schematic view of the present invention, illustrating the dispenser blower of the first guiding plate blowing the ring materials.
**Fig. 6** is another partially enlarged schematic view of the present invention, illustrating the fifth guiding rotary disc guiding the ring materials to the test rotary table.

### DETAILED DESCRIPTION OF THE INVENTION

The aforementioned and further advantages and features of the present invention will be understood by reference to the description of the preferred embodiment in conjunction with the accompanying drawings where the components are illustrated based on a proportion for explanation but not subject to the actual component proportion. Embodiments of the present invention are illustrated in detail along with the drawings. However, the technical features included by the present invention are not limited to certain embodiments hereby provided. Scope of the present invention shall be referred to the claims, which include all the possible replacements, modifications, and equivalent features.

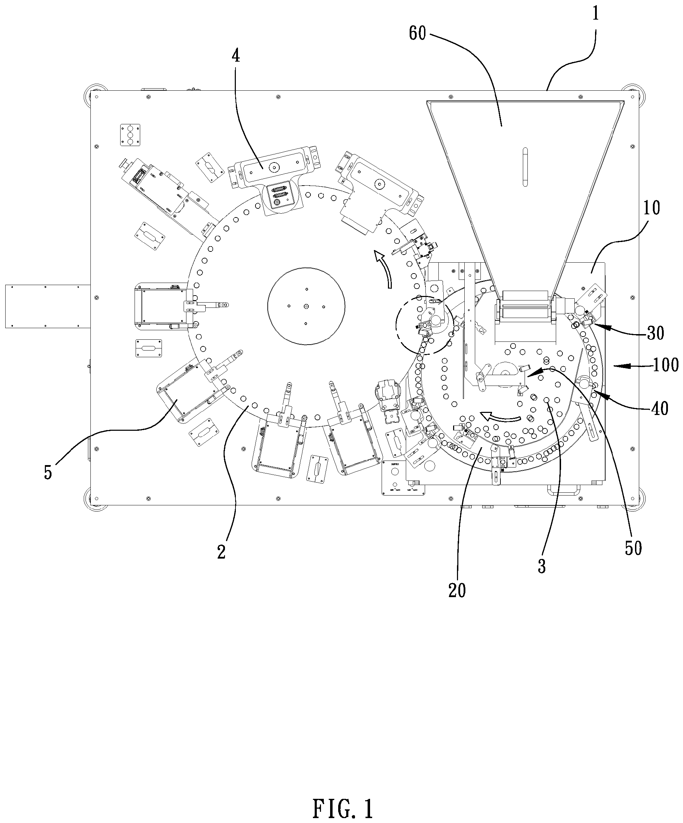

Referring to **Fig. 1** to **Fig. 6****,** the ring material supply system **100** of the present invention includes a base **10,** a dispenser rotary table **20,** a de-overlap blower set **30,** a material guiding rotary disc set **40,** and a dispenser blower set **50.** The ring material supply system **100** is disposed at a component examination machine **1** and arranged at one side of a test rotary table **2.** The ring material supply system **100** is imputed with a plurality of ring materials **3** through a material feeding device **60,** so as to arrange the ring materials **3** in a row and transport the ring materials **3** to the test rotary table **2** to be tested thereon. Also, a plurality of image sensors **4** are disposed around the test rotary table **2** for examining the facial defects and thickness of each target material. Afterward, the ring materials **3** are dispensed to a plurality of material containers **5.**

The base **10** is disposed at one side of the test rotary table **2.**

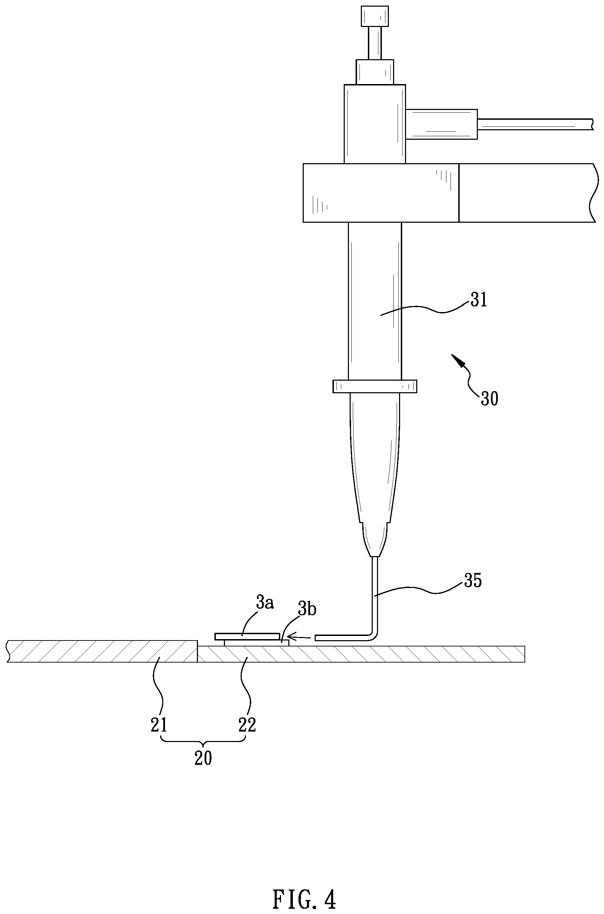

The dispenser rotary table **20** is rotatably disposed on the base **10** for holding the ring materials **3.** Also, the dispenser rotary table **20** rotates in a direction in opposite to the rotation direction of the test rotary table **2.** The dispenser rotary table **20** includes an inner circle area **21** and an outer circle area **22** disposed on the outer side of the inner circle area **21.** Also, referring to **Fig. 4****,** the horizontal height of the surface of the inner circle area **21** is higher than the horizontal height of the surface of the outer circle area **22,** forming a height difference between the inner circle area **21** and the outer circle area **22.** Therein, the height difference between the inner circle area **21** and the outer circle area **22** is approximately equal to the thickness of the ring material **3.** Further, the square measure of the inner circle area **21** is larger than the square measure of the outer circle area **22.** In addition, the dispenser rotary table **20** further includes an export portion **23** connected with one side of the test rotary table **2.**

The de-overlap blower set **30** is disposed on the periphery of the dispenser rotary table **20** for blowing the upper ring **3a** of the overlapped ring materials **3** in the outer circle area **22** to the inner circle area **21.** Therein, the de-overlap blower set **30** includes a first de-overlap blower **31,** a second de-overlap blower **32,** a third de-overlap blower **33,** and a fourth de-overlap blower **34** that are disposed in a clockwise direction on the periphery of the dispenser rotary table **20.** Each de-overlap blower of the de-overlap blower set **30** is connected with the pneumatic pressure source in the factory and provided with an L shaped blowing portion **35,** respectively. The blowing portions **35** are disposed approximately above the outer circle area **22.** In an embodiment of the present invention, the second de-overlap blower **32** and the third de-overlap blower **33** are disposed in adjacent to each other; the second de-overlap blower **32,** the third de-overlap blower **33,** and the fourth de-overlap blower **34** are disposed at the same lateral side with the export portion **23;** and the third de-overlap blower **33** and the fourth de-overlap blower **34** are disposed at two sides of the export portion **23,** respectively

The material guiding rotary disc set **40** is rotatably disposed around the periphery of the dispenser rotary table **20** for guiding the movement of the ring materials **3.** In an embodiment of the present invention, the material guiding rotary disc set **40** comprises a first guiding rotary disc **41,** a second guiding rotary disc **42,** a third guiding rotary disc **43,** and a fourth guiding rotary disc **44,** and a fifth guiding rotary disc **45.** The first guiding rotary disc **41,** the third guiding rotary disc **43,** the fourth guiding rotary disc **44,** and the fifth guiding rotary disc **45** are disposed in adjacent to the first de-overlap blower **31,** the second de-overlap blower **32,** the third de-overlap blower **33,** and the fourth de-overlap blower **34,** while the second guiding rotary disc **42** is disposed between the first guiding rotary disc **41** and the third guiding rotary disc **43** and faces the export portion **23.** Also, each guiding rotary disc is driven by a motor **46** to rotate, respectively. The second guiding rotary disc **42** and the fifth guiding rotary disc **45** are disposed between the inner circle area **21** and the outer circle area **22.** The first guiding rotary disc **41,** the third guiding rotary disc **43,** and the fourth guiding rotary disc **44** are disposed on the outer circle area **22.**

In an embodiment of the present invention, a plurality of adjustment plates **47** are included, wherein the amount of the adjustment plates **47** is identical to the amount of the guiding rotary discs. One end of each of the adjustment plates **47** is fixed to the base **10** and allowed to be transversely adjusted, with the corresponding motor **46** disposed on the other end of the adjustment plate **47.** Therein, the first de-overlap blower **31,** the second de-overlap blower **32,** the third de-overlap blower **33,** and the fourth de-overlap blower **34** disposed on the corresponding adjustment plate **47,** respectively. In other words, the adjustment plate **47** on which the second guiding rotary disc **42** being disposed does not include a de-overlap blower.

An L shaped support rack **70** is further included, with one end thereof fixed to the base **10,** and the other end thereof extending above the inner circle area **21** from the outer circle area **22.**

A first guiding plate **24** and a second guiding plate **25** are further included. The first guiding plate **24** is shaped in an approximate arc shape and connected between two neighboring adjustment plates **47.** Also, the first guiding plate **24** is disposed on one side of the export portion **23** and positioned above the inner circle area **21** of the dispenser rotary table **20** for guiding the movement of the ring materials **3.** Therein, the second guiding rotary disc **42** is disposed on the outer side of the first guiding plate **24,** with one end of the first guiding plate **24** applied for guiding the ring materials **3** disposed in adjacent to the junction between the inner circle area **21** and the outer circle area **22.**

The second guiding plate **25** is disposed on an opposite side of the first guiding plate **24.** The second guiding plate **25** includes an angle bent between two ends of the second guiding plate **25** for guiding the ring materials **3** to move from the inner circle area **21** to the outer circle area **22.** Also, the second guiding plate **25** is connected with the support rack **70** and does not contact the dispenser rotary table **20.**

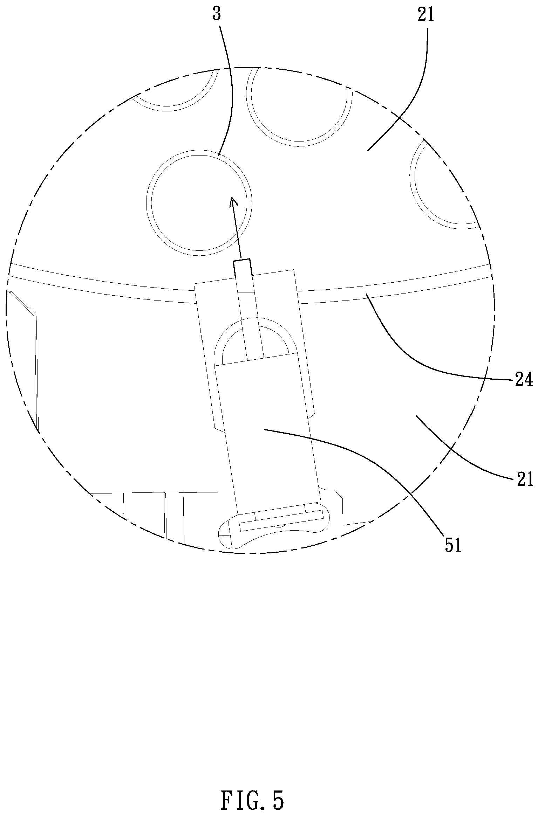

The dispenser blower set **50** is disposed on the base **10** for dispensing the ring materials **3.** Therein, the dispenser blower set **50** includes four dispenser blowers **51.** Two of the dispenser blowers **51** are disposed at an end of the support rack **70** located in the inner circle area **21** for blowing the ring materials **3** in the inner circle area **21** for preventing the ring materials **3** thereof from tangling or overlapping. One of the dispenser blowers **51** is disposed at one end of the first guiding plate **24** away from the first de-overlap blower **31.** One of the dispenser blowers **51** is disposed at the outer side of the first guiding plate **24,** and blows toward the inner circle area **21** through the bores or gap formed on the first guiding plate **24,** so as to prevent the ring materials **3** from tangling or overlapping, as shown by **Fig. 5****.**

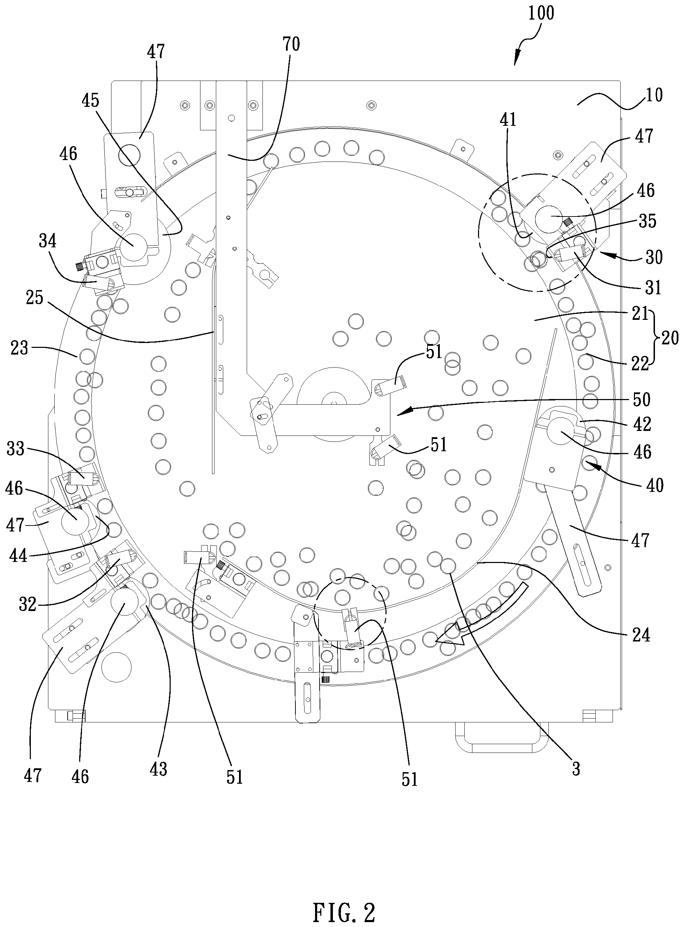

Referring to **Fig. 1** and **Fig. 2****,** the status of ring materials **3** supplying is illustrated. First, the ring materials **3** are fed through the material feeding device **60** to be placed on the dispenser rotary table **20.** With the dispenser rotary table **20** rotates in clockwise direction, as shown by **Fig. 2****,** the ring materials **3** are blown by the dispenser blower set **50** during the rotation of the dispenser rotary table **20,** such that the ring materials **3** are prevented from tangling and overlapping. Also, the ring materials **3** are arranged in a row and transported to the outer circle area **22** through the guiding of the first guiding plate **24** and the second guiding plate **25.**

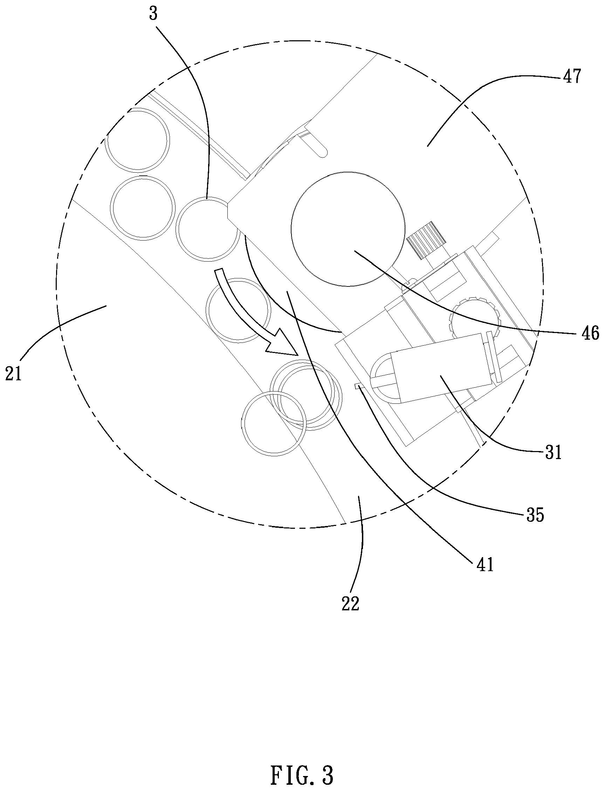

Referring to **Fig. 3****,** when the ring materials **3** move to the outer circle area **22** and contact the first guiding rotary disc **41,** the self-rotation of the first guiding rotary disc **41** guides the ring materials **3** to be arranged in a row, so as to prevent the friction force from affecting the arrangement performance of the ring materials **3.**

**Fig. 4** illustrates the operation status of de-overlapping the ring materials **3.** With a height difference between the inner circle area **21** and the outer circle area **22** of the dispenser rotary table **20,** when the ring materials **3** move to the outer circle area **22** during the rotation of the dispenser rotary table **20,** for overlapped ring materials **3,** the upper ring **3a** thereof will be blown back to the inner circle area **21** by the first de-overlap blower **31** of the de-overlap blower set **30,** while the lower ring **3b** will not be blown away and is able to be arranged in the row.

Subsequently, with each guiding rotary disc of the material guiding rotary disc set **40,** the ring materials **3** are smoothly guided to the movement route on the dispenser rotary table **20,** such that the arrangement performance of the ring materials **3** are not affected by the friction force. Similarly, the blowers after the first de-overlap blower **31** included in the de-overlap blower set **30** is also capable of de-overlapping the overlapped ring materials **3.**

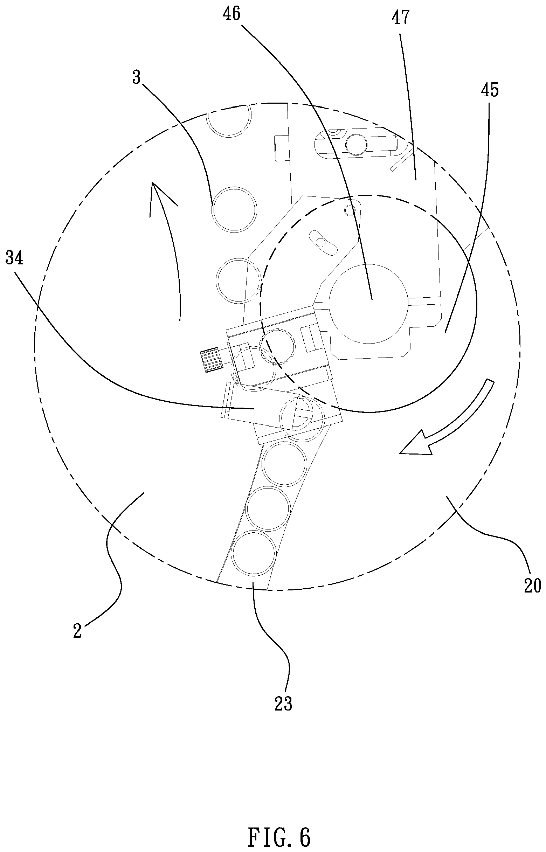

Therefore, with the guiding function of the material guiding rotary disc set **40** and the de-overlapping function of the de-overlap blower set **30,** the ring materials **3** are arranged one-by-one in a row to be transported from the outer circle area **22** to the export portion **23,** and to be further imputed by the fifth guiding rotary disc **45** to the test rotary table **2** to be tested, as shown by **Fig. 6****.** Therein, the second de-overlap blower **32** and the third de-overlap blower **33** are able to blow the overlapped ring materials **3** back to the inner circle area **21** again, so as to assure that the ring materials **3** at the export portion **23** are arranged in a row to be exported to the test rotary table **2.**

Although particular embodiments of the invention have been described in detail for purposes of illustration, various modifications and enhancements may be made without departing from the scope of protection as defined by the claims.

Accordingly, the invention is not to be limited except as by the appended claims.

## Claims

1. A ring material supply system (100), comprising:
a base (10);
a dispenser rotary table (20) rotatably disposed on the base (10) for holding a plurality of ring materials (3), the dispenser rotary table (20) having an inner circle area (21) and an outer circle area (22) disposed on an outer side of the inner circle area (21), the dispenser rotary table (20) further comprising an export portion (23);
a de-overlap blower set (30) disposed at a periphery of the dispenser rotary table (20), the de-overlap blower set (30) blowing an upper ring of two overlapping ring materials (3) to the inner circle area (21); **characterized in that** a horizontal height of a surface of the inner circle area (21) being higher than a horizontal height of a surface of the outer circle area (22), a height difference between the surface of the inner circle area (21) and the horizontal height of the surface of the outer circle area (22) being equal to a thickness of a ring (3), wherein the ring material supply system (100) further comprises
a material guiding rotary disc set (40) disposed at the periphery of the dispenser rotary table (20) for guiding a movement of the ring materials (30); and
a dispenser blower set (50) disposed on the base (10) for dispensing the ring materials (3).

2. The ring material supply system (100) of claim 1, wherein a square measure of the inner circle area (21) is larger than a square measure of the outer circle area (22).

3. The ring material supply system (100) of claim 1, further comprising a material feeding device (60) and a test rotary table (2), the material feeding device (60) imputing the ring materials (3) to the dispenser rotary table (20), the test rotary table (2) disposed at one side of the base (10), the test rotary table (2) rotating in a direction in opposite to a rotation direction of the dispenser rotary table (20), the test rotary table (2) receiving the ring materials (3) that are arranged from the export portion (23).

4. The ring material supply system (100) of claim 1, wherein the material guiding rotary disc set (40) comprises a plurality of guiding rotary discs that are driven to rotate by a motor (46), respectively.

5. The ring material supply system (100) of claim 4, further comprising a plurality of adjustment plates (47), one end of each adjustment plate (47) being fixed to the base (10) and transversely adjustable, with one of the motors (46) and one of the guiding rotary discs being disposed on the other end of the adjustment plate (47).

6. The ring material supply system (100) of claim 1, wherein the de-overlap blower set (30) comprises a first de-overlap blower (31), a second de-overlap blower (32), a third de-overlap blower (33), and a fourth de-overlap blower (34); the second de-overlap blower (32), the third de-overlap blower (33), and the fourth de-overlap blower (34) are disposed on a same side with the export portion (23), and the third de-overlap blower (33) and the fourth de-overlap blower (34) are disposed on two sides of the export portion (23).

7. The ring material supply system (100) of claim 5, further comprising an arc-shaped first guiding plate (24) connected with two neighboring adjustment plates (47) and disposed above the inner circle area (21) of the dispenser rotary table (20).

8. The ring material supply system (100) of claim 7, further comprising a support rack (70), with one end of the support rack (70) fixed to the base (10), and the other end of the support rack (70) extending above the inner circle area (21) from the outer circle area (22) for the dispenser blower set (50) to be disposed thereon.

9. The ring material supply system (100) of claim 8, further comprising a second guiding plate (25) disposed face to face with the first guiding plate (24), the second guiding plate (25) connected with the support rack (70) for guiding the ring materials (3) to move from the inner circle area (21) to the outer circle area (22).

## Patentansprüche

1. Ring-Material-Bereitstellungs-System (100), aufweisend
eine Basis (10),
einen Bereitstellungs-Rotations-Tisch (20), welcher drehbar auf der Basis (10) angeordnet ist, um eine Mehrzahl an Ringmaterialien (3) aufzunehmen, wobei der Bereitstellungs-Rotations-Tisch (20) eine innere Kreisfläche (21) und eine äußere Kreisfläche (22) hat, welche an einer äußeren Seite der inneren Kreisfläche (21) angeordnet ist, wobei der Bereitstellungs-Rotations-Tisch (20) ferner einen Weitergabebereich (23) aufweist,
einen Entüberlappungs-Gebläse-Satz (30), welcher an einem Rand des Bereitstellungs-Rotations-Tischs (20) angeordnet ist, wobei der Entüberlappungs-Gebläse-Satz (30) einen oberen Ring von zwei überlappenden Ringmaterialien (3) in die innere Kreisfläche (21) bläst,
**dadurch gekennzeichnet, dass** eine horizontale Höhe einer Oberfläche der inneren Kreisfläche (21) höher ist als eine horizontale Höhe einer Oberfläche der äußeren Kreisfläche (22), wobei ein Höhenunterschiede zwischen der Oberfläche der inneren Kreisfläche (21) und der horizontalen Höhe der äußeren Kreisfläche (22) gleich einer Dicke eines Rings (3) ist, wobei das Ringmaterialzufuhrsystem (100) ferner aufweist,
einen Material-führenden Rotations-Scheiben-Satz (40), welcher am Rand des Bereitstellungs-Rotations-Tischs (20) angeordnet ist, um eine Bewegung der Ringmaterialien (30) zu führen, und
ein Bereitstellungs-Gebläse-Satz (50) zum Bereitstellen der Ringmaterialien (3), welcher auf der Basis (10) angeordnet ist.

2. Ring-Material-Bereitstellungs-System (100) gemäß Anspruch 1, wobei ein Flächenmaß der inneren Kreisfläche (21) größer als ein Flächenmaß der äußeren Kreisfläche (22) ist.

3. Ring-Material-Bereitstellungs-System (100) gemäß Anspruch 1, ferner aufweisend eine Material-Zufuhr-Vorrichtung (60) und einen Test-Rotations-Tisch (2), wobei die Material-Zufuhr-Vorrichtung (60) die Ringmaterialien (3) dem Bereitstellungs-Rotations-Tisch (20) zuführt, wobei der Test-Rotations-Tisch (2) an einer Seite der Basis (10) angeordnet ist, wobei der Test-Rotations-Tisch (2) in eine Richtung entgegengesetzt zu einer Rotationsrichtung des Bereitstellungs-Rotations-Tisch (20) rotiert, wobei der Test-Rotations-Tisch (2) die arrangierten Ringmaterialien (3) von dem Weitergabebereich (23) erhält.

4. Ring-Material-Bereitstellungs-System (100) gemäß Anspruch 1, wobei der Material-führenden Rotations-Scheiben-Satz (40) eine Mehrzahl von führenden Rotationsscheiben aufweist, welche angetrieben werden, um sich zu drehen, durch einen Elektromotor (46).

5. Ring-Material-Bereitstellungs-System (100) gemäß Anspruch 4, ferner aufweisend eine Mehrzahl von Anpassungsplatten (47), wobei ein Ende jeder Anpassungsplatte (47) an der Basis (10) befestigt und quer anpassbar ist, wobei einer der Elektromotoren (46) und eine der führenden Rotationsscheiben auf der anderen Seite der Anpassungsplatte (47) angeordnet sind.

6. Ring-Material-Bereitstellungs-System (100) gemäß Anspruch 1, wobei der Entüberlappungs-Gebläse-Satz (30) aufweist ein erstes Entüberlappungs-Gebläse (31), ein zweites Entüberlappungs-Gebläse (32), ein drittes Entüberlappungs-Gebläse (33), und ein viertes Entüberlappungs-Gebläse (34), wobei das zweite Entüberlappungs-Gebläse (32), das dritte Entüberlappungs-Gebläse (33), das vierte Entüberlappungs-Gebläse (34) auf einer gleichen Seite mit dem Weitergabebereich (23) angeordnet sind, und das dritte Entüberlappungs-Gebläse (33) und das vierte Entüberlappungs-Gebläse (34) auf zwei Seiten des Weitergabebereichs (23) angeordnet sind.

7. Ring-Material-Bereitstellungs-System (100) gemäß Anspruch 5, welches ferner eine bogenförmige erste Führungsplatte (24) aufweist, welche mit zwei benachbarten Anpassungsplatten (47) verbunden ist, und über der inneren Kreisfläche (21) des Bereitstellungs-Rotations-Tisch (20) angeordnet ist.

8. Ring-Material-Bereitstellungs-System (100) gemäß Anspruch 7, welches ferner ein Lagerungsgestell (70) aufweist, wobei ein Ende des Lagerungsgestell (70) an der Basis (10) angebracht ist, und das andere Ende des Lagerungsgestell (70) sich von der äußeren Kreisfläche (22) über die innere Kreisfläche (21) erstreckt, um den Bereitstellungs-Gebläse-Satz (50) darauf anzuordnen.

9. Ring-Material-Bereitstellungs-System (100) gemäß Anspruch 8, welches ferner eine zweite Führungsplatte (25) aufweist, welche von Angesicht zu Angesicht der ersten Führungsplatte (24) angeordnet ist, wobei die zweite Führungsplatte (25) mit dem Lagerungsgestell (70) verbunden ist, um die Ringmaterialien (3) zu führen sich von der inneren Kreisfläche (21) auf die äußere Kreisfläche (22) zu bewegen.

## Revendications

1. Système d'alimentation en matériaux annulaires (100), comprenant :
une base (10) ;
une table rotative de distribution (20) disposée de manière rotative sur la base (10) pour contenir une pluralité de matériaux annulaires (3), la table rotative de distribution (20) ayant une zone circulaire interne (21) et une zone circulaire externe (22) disposée sur un côté extérieur de la zone circulaire interne (21), la table rotative de distribution (20) comprenant en outre une partie d'export (23) ;
un ensemble soufflante de suppression de chevauchement (30) disposé à une périphérie de la table rotative de distribution (20), l'ensemble soufflante de suppression de chevauchement (30) soufflant un anneau supérieur de deux matériaux annulaires se chevauchant (3) jusqu'à la zone circulaire interne (21) ; **caractérisé par le fait qu'**une hauteur horizontale d'une surface de la zone circulaire interne (21) est plus haute qu'une hauteur horizontale d'une surface de la zone circulaire externe (22), une différence de hauteur entre la surface de la zone circulaire interne (21) et la hauteur horizontale de la surface de la zone circulaire externe (22) est égale à une épaisseur d'un anneau (3), le système d'alimentation en matériaux annulaires (100) comprenant en outre un ensemble disque rotatif de guidage de matériaux (40) disposé à la périphérie de la table rotative de distribution (20) pour guider un mouvement des matériaux annulaires (30) ; et
un ensemble soufflante de distribution (50) disposé sur la base (10) pour distribuer les matériaux annulaires (3).

2. Système d'alimentation en matériaux annulaires (100) selon la revendication 1, dans lequel une aire de surface de la zone circulaire interne (21) est plus grande qu'une aire de surface de la zone circulaire externe (22) .

3. Système d'alimentation en matériaux annulaires (100) selon la revendication 1, comprenant en outre un dispositif d'apport de matériaux (60) et une table rotative de test (2), le dispositif d'apport de matériaux (60) attribuant les matériaux annulaires (3) à la table rotative de distribution (20), la table rotative de test (2) étant disposée sur un côté de la base (10), la table rotative de test (2) tournant dans un sens opposé à un sens de rotation de la table rotative de distribution (20), la table rotative de test (2) recevant les matériaux annulaires (3) qui sont agencés à partir de la partie d'export (23).

4. Système d'alimentation en matériaux annulaires (100) selon la revendication 1, dans lequel l'ensemble disque rotatif de guidage de matériau (40) comprend une pluralité de disques rotatifs de guidage qui sont entraînés en rotation par un moteur (46), respectivement.

5. Système d'alimentation en matériaux annulaires (100) selon la revendication 4, comprenant en outre une pluralité de plaques de réglage (47), une extrémité de chaque plaque de réglage (47) étant fixée à la base (10) et étant réglable transversalement, l'un des moteurs (46) et l'un des disques rotatifs de guidage étant disposés sur l'autre extrémité de la plaque de réglage (47) .

6. Système d'alimentation en matériaux annulaires (100) selon la revendication 1, dans lequel l'ensemble soufflante de suppression de chevauchement (30) comprend une première soufflante de suppression de chevauchement (31), une deuxième soufflante de suppression de chevauchement (32), une troisième soufflante de suppression de chevauchement (33) et une quatrième soufflante de suppression de chevauchement (34) ; la deuxième soufflante de suppression de chevauchement (32), la troisième soufflante de suppression de chevauchement (33) et la quatrième soufflante de suppression de chevauchement (34) sont disposées sur un même côté que la partie d'export (23), et la troisième soufflante de suppression de chevauchement (33) et la quatrième soufflante de suppression de chevauchement (34) sont disposées sur deux côtés de la partie d'export (23).

7. Système d'alimentation en matériaux annulaires (100) selon la revendication 5, comprenant en outre une première plaque de guidage en forme d'arc (24) reliée à deux plaques de réglage voisines (47) et disposée au-dessus de la zone circulaire interne (21) de la table rotative de distribution (20).

8. Système d'alimentation en matériaux annulaires (100) selon la revendication 7, comprenant en outre un bâti de support (70), une extrémité du bâti de support (70) étant fixée à la base (10), et l'autre extrémité du bâti de support (70) s'étendant au-dessus de la zone circulaire interne (21) depuis la zone circulaire externe (22) pour disposer l'ensemble soufflante de distribution (50) sur celle-ci.

9. Système d'alimentation en matériaux annulaires (100) selon la revendication 8, comprenant en outre une seconde plaque de guidage (25) disposée face à la première plaque de guidage (24), la seconde plaque de guidage (25) étant reliée au bâti de support (70) pour guider les matériaux annulaires (3) en déplacement de la zone circulaire interne (21) jusqu'à la zone circulaire externe (22).
